Europäisches Patentamt

European Patent Office

Office européen des brevets

(11) Veröffentlichungsnummer : **0 078 464 B1**

(12) **EUROPÄISCHE PATENTSCHRIFT**

(45) Veröffentlichungstag der Patentschrift :
02.01.86

(51) Int. Cl.⁴ : **G 02 F   1/17**

(21) Anmeldenummer : **82109751.6**

(22) Anmeldetag : **22.10.82**

(54) **Optische Regelschaltung für elektrochrome Schichten.**

(30) Priorität : **29.10.81 DE 3142907**

(43) Veröffentlichungstag der Anmeldung :
**11.05.83 Patentblatt 83/19**

(45) Bekanntmachung des Hinweises auf die Patenterteilung : **02.01.86 Patentblatt 86/01**

(84) Benannte Vertragsstaaten :
**AT CH DE FR GB LI**

(56) Entgegenhaltungen :
**FR-A- 2 328 979**
**US-A- 4 160 241**
**US-A- 4 294 519**

(73) Patentinhaber : **Firma Carl Zeiss**

**D-7920 Heidenheim (Brenz) (DE)**

(72) Erfinder : **Ballmer, Horst, Dipl.-Ing.**
**Händelstrasse 25**
**D-7920 Heidenheim (Brenz) (DE)**
Erfinder : **Wiedmann, Erwin**
**Hochgasse 2**
**D-7081 Essingen (DE)**

## Beschreibung

Die Erfindung betrifft ein Verfahren und eine Vorrichtung zur Regelung des Absorptionsgrades einer elektrochromen Schicht.

Elektrochrome Schichten werden beim Anlegen einer Spannung, bzw. bei einer Zufuhr von Ladungen in den optisch aktiven Teil der Schicht, dunkel, d. h. ihr Absorptionsgrad nimmt zu. Beim Abzug von Ladungen werden die Schichten wieder transparent.

Die Ausnutzung dieser Erscheinung ist bekannt für Anzeigeelemente, wobei nur der transparente und der gefärbte Zustand verwendet werden. Dabei wird beim Färben eine definierte Zeit ein definierter Strom zugeführt. Eine zu große Zufuhr von Ladungen muß vermieden werden, weil sonst die Schicht zerstört wird. Dagegen ist der Entfärbevorgang unkritisch, weil nach dem vollständigen Entfärben der Schicht diese beim Beibehalten der Polarität der angelegten Spannung einen elektrischen Isolator darstellt und dadurch keine weiteren Vorgänge mehr stattfinden können. Ein wesentlicher Vorteil der elektrochromen Schichten besteht darin, daß sie nur während der Änderung ihres Absorptionsgrades Strom verbrauchen.

Für Anzeigeelemente sind zwei Zustände der elektrochromen Schicht ausreichend. Für andere Anwendungszwecke, wie z. B. Sonnenschutzbrillen, abblendbare Spiegel und optische Filter sind jedoch mehr Zustände vorteilhaft, wobei eine kontinuierliche Einstellung besonders vorteilhaft ist. Verwendet man als Maß für den Absorptionsgrad der Schicht die Summe der zu- und abgeführten Ladungen, dann stimmt dieses Maß immer weniger mit dem tatsächlichen Absorptionsgrad überein, je öfter man zwischen verschiedenen Absorptionsgraden hin- und herwechselt, da bei den Schichten je nach Güte und Alter im unterschiedlichen Maß Verlustprozesse auftreten, die keine optische Wirkung haben.

Aus der DE-A-2 644 528 ist eine Brille mit elektrochromen Schichten bekannt. Die Färbung und Entfärbung der Schichten erfolgt durch eine in die Brillenfassung eingesetzte Batterie über von Hand zu betätigende Schalter oder über eine Steuereinrichtung mit einem photoelektrischen Empfänger, der die auf die Brille auftreffende Umgebungshelligkeit mißt.

Im letzteren Fall besteht jedoch der Nachteil, daß die elektrochromen Schichten durch eine zu große Ladungszufuhr im Laufe vieler Veränderungen des Absorptionsgrades zerstört werden können. Das gilt auch dann, wenn man die ungleichen Ladungsmengen, die zum Färben und Entfärben notwendig sind, berücksichtigt, weil diese Unterschiede nur näherungsweise erfaßbar sind. Der einzige Ausweg, nämlich genügend oft über den völlig entfärbten Zustand zu gehen, ist bei vielen Anwendungen nicht möglich oder mit Nachteilen verbunden.

Bei einer kontinuierlichen Regelung ist außerdem zu beachten, daß das System keine unnötigen Regelvorgänge durch eine zu große Empfindlichkeit ausführen soll. Bei einer Einstellung des Absorptionsgrades der elektrochromen Schicht von Hand wäre bei vielen Anwendungen eine Einstellmöglichkeit von definierten Werten vorteilhaft.

Der vorliegenden Erfindung liegt daher die Aufgabe zugrunde, ein Verfahren und eine Anordnung für elektrochrome Schichten anzugeben, welche es ermöglichen, den Absorptionsgrad kontinuierlich einzustellen, wobei auch nach zahlreichen Änderungen des Absorptionsgrades eine gute Reproduzierbarkeit erreicht wird, ohne daß der völlig entfärbte Zustand von Zeit zu Zeit eingestellt werden muß, und wobei unnötige Regelvorgänge vermieden werden.

Die gestellte Aufgabe wird gemäß der Erfindung dadurch gelöst, daß der Absorptionsgrad optisch gemessen wird, daß das daraus abgeleitete Signal mit einem Vorgabewert verglichen wird und daß das resultierende Signal einem Regler zugeführt wird, welcher der Schicht elektrischen Strom der einen oder anderen Richtung zuführt. In einer zweckmäßigen Ausgestaltung hat der Regler eine Totzone und zwei Hysteresebereiche.

Eine Anordnung zur Durchführung des erfindungsgemäßen Verfahrens zeichnet sich dadurch aus, daß eine optische Meßeinrichtung mit einem Regler verbunden ist, dessen Eingang außerdem mit einem Schaltungsteil zur Vorgabe eines Sollwertes verbunden ist, daß der Regler mit den Schalteingängen von zwei begrenzbaren Stromquellen verbunden ist und daß die Stromquellen mit der elektrochromen Schicht zur Zufuhr, von Strom der einen oder der anderen Richtung, verbunden sind.

In einer weiteren Anordnung ist der Regler aus zwei als Hysteresegliedern beschalteten Operationsverstärkern aufgebaut, wobei zwischen den Hysteresebereichen eine Totzone liegt.

In einer weiteren Ausführungsform sind für die begrenzbaren Stromquellen Transistoren vorgesehen, die in Emitterschaltung über Basiswiderstände angesteuert werden.

Die optische Meßeinrichtung kann z. B. aus einer Leuchtdiode und einer Pindiode oder einem Fototransistor bestehen, die auf gegenüberliegenden Seiten der elektrochromen Schicht angeordnet sind. Möglich ist auch die Anordnung beider Bauelemente auf der gleichen Schichtseite, wenn die gegenüberliegende Seite verspiegelt ist. Zur Unterstützung der Batterie können Solarzellen vorgesehen werden. Es ist auch möglich, die optische Meßeinrichtung mit kurzen Lichtblitzen in zeitlichem Abstand zu betreiben.

Für die Erzeugung des Vorgabewertes sind in weiteren Ausführungsformen Anordnungen mit einem Regelpotentiometer oder einem Stufenschalter vorgesehen. Besonders vorteilhaft ist es, für die Erzeugung des Vorgabewertes einen optischen Sensor zu verwenden, der das auf die elektrochrome Schicht einfallende Licht mißt. Damit kann erreicht werden, daß hinter der Schicht immer die gleiche Helligkeit besteht. In allen Fällen wird der Vorgabewert zweckmäßigerweise so begrenzt, daß sein Wertebereich zwischen der maximal zulässigen Färbung der Schicht und der vollständig entfärbten Schicht liegt.

Die Erfindung wird im folgenden anhand der Figuren 1 bis 4 näher erläutert. Es zeigen :

Figur 1 ein Ausführungsbeispiel für die Anordnung zur Regelung des Absorptionsgrades einer elektrochromen Schicht ;

Figur 2 ein Ausführungsbeispiel für die Erzeugung des Vorgabewertes ;

Figur 3 ein anderes Ausführungsbeispiel für die Erzeugung des Vorgabewertes und

Figur 4 ein Ausführungsbeispiel für die helligkeitsabhängige Erzeugung des Vorgabewertes.

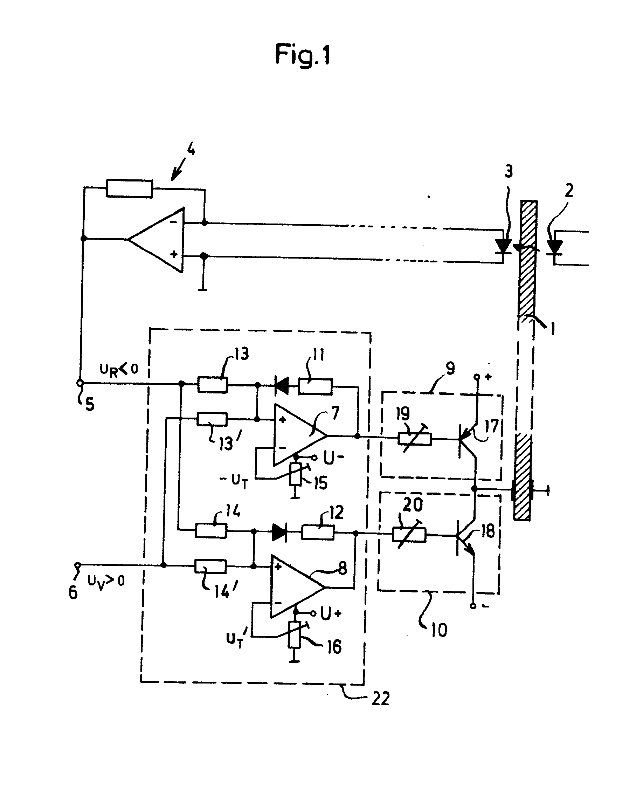

In Fig. 1 ist mit 1 die elektrochrome Schicht bezeichnet. Zur Messung ihres Absorptionsgrades dient die Leuchtdiode 2 als Lichtquelle und die Pindiode 3 oder ein Fototransistor als Empfänger. Nicht gezeichnet ist eine lichtdichte Abdeckung der Meßeinrichtung, welche die Verfälschung des Meßergebnisses durch Außenlicht verhindert. Das Signal des Empfängers 3 wird im Operationsverstärker 4 verstärkt und steht als Regelgröße $U_R$ am Schaltungspunkt 5 zur Verfügung. Ihr Wert liegt zwischen $U_R$min für die maximal zulässige Färbung der Schicht und $U_R$max für die völlig entfärbte Schicht.

Die Regelgröße $U_R$ wird verglichen mit einem am Schaltungspunkt 6 liegenden Vorgabewert $U_V$, welcher den geforderten Absorptionsgrad der Schicht vorgibt. Bei symmetrischer Dimensionierung der in Fig. 1 dargestellten Ausführungsform entsprechen die beiden Grenzwerte der Regelgröße $U_R$min und $U_R$max den entsprechenden Grenzwerten des Vorgabewertes. Regelgröße und Vorgabewert sind Spannungswerte gleichen Betrages und entgegengesetzter Polarität. Die erwähnte Grenzwerte werden einmal aus den entsprechenden Systemzuständen ermittelt, um den Vorgabewert $U_V$ entsprechend zu begrenzen.

Die verwendete Regelungsanordnung ist als Dreipunktregler aus zwei als Hysteresegliedern beschalteten Operationsverstärkern 7 und 8 aufgebaut, von denen jeder eine der beiden begrenzbaren Stromquellen 9 und 10 treibt. Die Hysteresebereiche $-U_H$ und $+U_H'$ der beschalteten Operationsverstärker 7 und 8 werden durch die Widerstände 11, 13 und 13' bzw. 12, 14, 14' sowie durch die Betriebsspannungen $U_+$ und $U_-$ festgelegt. Durch die an den Potentiometern 15 und 16 einstellbaren Spannungswerte $-U_T$ und $+U_T'$ werden die Hysteresefelder symmetrisch zum stationären Zustand $U_V - U_R = 0$ verschoben und bestimmen damit die Breite der Totzone.

Die begrenzbaren Stromquellen 9 und 10 bestehen in einer zweckmäßigen Ausführungsform aus dem PNP-Transistor 17 und dem NPN-Transistor 18, deren Emitter mit einer positiven und einer negativen Spannungsquelle verbunden sind und deren gemeinsamer Verbindungspunkt mit der elektrochromen Schicht verbunden ist. Die Transistoren 17 und 18 werden über die Basiswiderstände 19 und 20 angesteuert, deren Größe über die Stromverstärkung der Transistoren alleine den Lade- bzw. Entladestrom für die Schicht begrenzt.

Durch die oben beschriebenen Maßnahmen entstehen folgende Bereiche des Reglers :

1. Im Bereich $U_V - U_R < -U_H-U_T$ ist die Ausgangsspannung $U_1$ des Operationsverstärkers 7 negativ und die Ausgangsspannung $U_2$ des Operationsverstärkers 8 ebenfalls negativ. Damit leitet der Transistor 17 während der Transistor 18 sperrt : die Schicht wird gefärbt.

2. Im Bereich $U_V - U_R > U_H' + U_T'$ sind $U_1$ und $U_2$ positiv. Es sperrt der Transistor 17 während der Transistor 18 leitet : die Schicht wird entfärbt.

3. Im Bereich $- U_T < U_V - U_R < U_T'$ ist $U_1$ positiv und $U_2$ negativ. Beide Transistoren sperren : die Schicht wird nicht verändert.

4. In den an die Totzonen $- U_T$ und $+ U_T'$ anschließenden Hysteresebereichen $- U_H$ und $+ U_H'$ überlappen die aktiven Bereiche den Bereich, in dem die Schicht nicht verändert wird. Durch diese Maßnahme ist gewährleistet, daß ein geringes Aufhellen der elektrochromen Schicht nach einem abgeschlossenen Färbevorgang nicht sofort wieder ein neuen Färbevorgang hervorruft bzw. daß ein leichtes Nachdunkeln nach einem Entfärbevorgang nicht sofort wieder einen neuen Entfärbevorgang hervorruft.

Durch die Verbreiterung des stationären Zustandes um den Nullpunkt und durch die Hysteresebereiche an den Grenzen der Regelbereiche wird ein Schwingen des Regelkreises und ein zu häufiges Nachregeln verhindert.

In Fig. 1 sind Sender 2 und Empfänger 3 auf gegenüberliegenden Seiten der Schicht angeordnet. In einer anderen Ausführungsform sind Sender und Empfänger auf der gleichen Seite der Schicht angeordnet und die andere Seite der Schicht ist verspiegelt. In diesem Fall ist der Wertebereich für die Regelgröße $U_R$ doppelt so groß und der Wertebereich für den Vorgabewert muß entsprechend dimensioniert werden.

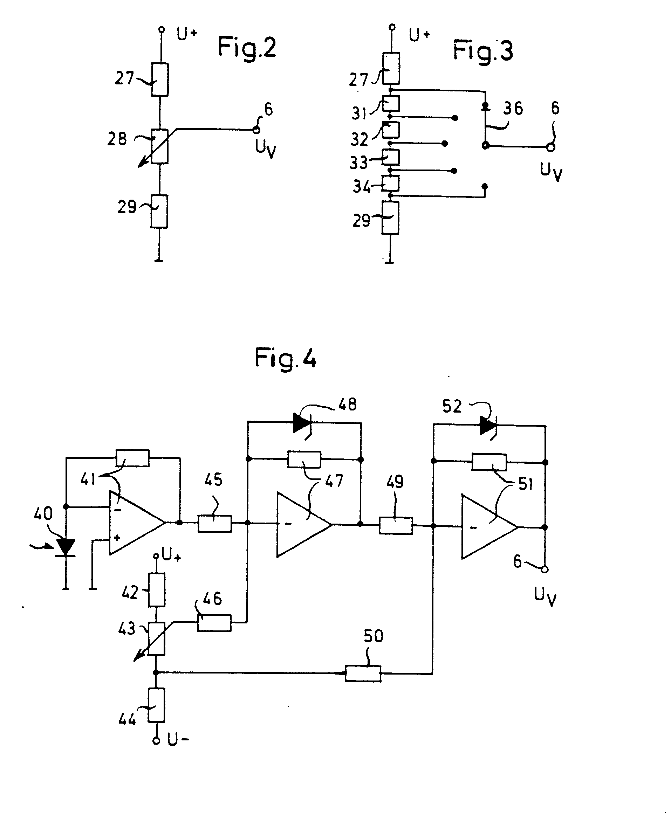

Fig. 2 zeigt eine Anordnung zur Erzeugung des Vorgabewertes $U_V$, mit welcher der gewünschte Absorptionsgrad der elektrochromen Schicht eingestellt werden kann. Die Widerstände 27 bis 29 bilden einen Spannungsteiler, wobei durch die Widerstände 27 und 29 der Maximalwert und der Minimalwert des Vorgabewertes entsprechend den Grenzenwerten der Regelgröße $U_R$min und $U_R$max vorgegeben wird.

Mit dem Dreh- oder Schiebepotentiometer 28 kann der gewünschte Absorptionsgrad der Schicht im Bereich zwischen vollständig gefärbter und entfärbter Schicht eingestellt werden. In Fig. 3 wird an Stelle des Potentiometers 28 ein Schalter 36 verwendet, mit dem sich in dargestellten Ausführungsbeispiel fünf Stufen des Absorptionsgrades einstellen lassen. Die Widerstände 31 bis 34 können so gewählt werden, daß eine gleichmäßige oder z. B. eine logarithmische Stufung des Absorptionsgrades entsteht. Auch das Potentiometer 28 in Fig. 2 kann eine lineare oder z. B. eine logarithmische Charakteristik haben.

In Fig. 4 ist eine besonders vorteilhafte Ausführungsform für die Erzeugung des Vorgabewertes dargestellt. Von einem optischen Sensor 40, z. B. einer Pin-Diode, wird das auf die elektrochrome Schicht einfallende Licht gemessen. Das vom Sensor 40 erzeugte Signal wird von dem beschalteten Operationsverstärker 41 verstärkt und anschließend mit dem am Potentiometer 43 vom Benutzer eingestellten Wert verknüpft. Hierfür sind die Operationsverstärker 47 und 51 als invertierende Addierer beschaltet. Der Operationsverstärker 47 begrenzt mit der Zenerdiode 48 den Minimalwert des Vorgabewertes und der Operationsverstärker 51 begrenzt mit der Zenerdiode 52 den Maximalwert des Vorgabewertes.

Durch das Potentiometer 43 kann der Benutzer den Zusammenhang zwischen dem auf den Sensor 40 einfallenden Licht und dem Absorptionsgrad der Schicht verändern, d. h. er kann den Beginn des Färbe- bzw. Entfärbevorganges in Abhängigkeit des einfallenden Lichtes wählen. Dabei wird durch die beschriebenen Begrenzungen dafür gesorgt, daß der elektrochromen Schicht beim Erreichen der maximal zulässigen Färbung keine weiteren Ladungen mehr zugeführt werden und daß beim Erreichen des vollkommen entfärbten Zustandes der Entfärbevorgang beendet wird. Selbstverständlich kann das Potentiometer 43 in Fig. 4 auch durch Festwiderstände mit geeigneter Dimensionierung ersetzt werden.

Das beschriebene Verfahren und die beschriebenen Anordnungen lassen sich besonders vorteilhaft z. B. bei Sonnenschutzbrillen anwenden. Die bekannten Sonnenschutzbrillen mit veränderlichem Absorptionsgrad durch die Verwendung von phototropen Gläsern haben den Nachteil, daß die Änderung des Absorptionsgrades zu langsam erfolgt und daß sie hinter den Windschutzscheiben von Autos nicht funktionieren. Diese Nachteile haben elektrochrome Schichten nicht. Mit den beschriebenen Schaltungsanordnungen kann der Absorptionsgrad einer Sonnenschutzbrille entweder kontinuierlich entsprechend der Umfeldhelligkeit oder in Stufen verändert werden. Im letzteren Fall ist es zweckmäßig an Stelle des in Fig. 3 gezeichneten Stufenschalters 36 Berührungssensoren zu verwenden, die z. B. in die Bügel des Brillengestelltes eingebaut werden können.

Bei einer Sonnenschutzbrille wird der für die Schaltungsanordnung notwendige Strom einer in die Brille einsetzbaren Batterie entnommen. Da der Stromverbrauch der für die optische Messung des Absorptionsgrades notwendigen Leuchtdiode 2 verhältnismäßig groß ist, ist es zweckmäßig zur Unterstützung der Batterie Solarzellen vorzusehen, welche in die Fassung der Brille integriert werden. Vorteilhaft in Hinblick auf den Stromverbrauch ist es auch, keine kontinuierliche optische Messung (mit Gleichlicht) durchzuführen, sondern — wenn kein Regelvorgang läuft — z. B. jede Sekunde nur eine Messung mit einem kurzen Lichtimpuls auszuführen.

Besonders vorteilhaft sind die beschriebenen Anordnungen bei Brillen mit optischer Wirkung, die dadurch als normale Brillen und als Sonnenbrillen verwendet werden können. Es ist ferner möglich, die Brillenlinsen durch unterschiedliche Kontaktierung im oberen Bereich stärker zu färben als im unteren Bereich und damit die Wirkung der sogenannten Autofahrersonnenbrillen zu erreichen, bei denen das Armaturenbrett durch den weniger gefärbten Teil beobachtet wird.

Als weiteres Anwendungsbeispiel kommen auch optische Anordnungen in Betracht, bei denen sich ein gefordertes unterschiedliches Reflexionsvermögen durch ein unterschiedliches Absorptionsvermögen ersetzen läßt. Ein Beispiel sind abblendbare Autorückspiegel. Die bekannte Ausführung besteht aus einer Glasplatte und einem hinter ihr angeordneten Spiegel, der im Falle eines zu starken Lichteinfalles weggeklappt wird. Diese Lösung hat jedoch Nachteile : Der Spiegel muß von Hand weggeklappt werden, was nur bei Innenspiegeln mit geringem mechanischen Aufwand möglich ist. Eine Automatisierung ist nur mit verhältnismäßig großem Aufwand möglich. Ein unterschiedliches Reflexionsvermögen läßt sich auch durch eine (feststehende) rückseitig verspiegelte Glasplatte erreichen, auf deren Vorderseite eine elektrochrome Schicht aufgebracht ist. Mit den mit Fig. 1 bis 3 beschriebenen Anordnungen kann eine zeitweise Abblendwirkung durch die Betätigung eines Potentiometers oder eines Stufenschalters erreicht werden, was insbesondere bei Außenspiegeln einen Vorteil bietet ; aber auch generell den Vorteil hat, daß das Bedienungselement völlig unabhängig vom Spiegel plaziert werden kann. Selbstverständlich ist auch eine Ausführung mit Tasten möglich. Für dieses Anwendungsbeispiel ist die in Fig. 4 dargestellte helligkeitsgesteuerte Erzeugung des Vorgabewertes ein besonderer Vorteil, weil durch sie bei einer Blendung das Absorptionsvermögen des Rückspiegels automatisch vergrößert wird und bei Fortfall der Blendung wieder verkleinert wird, ohne daß der Fahrer etwas tun muß. Das Regelpotentiometer 43 ermöglicht die jederzeitige Anpassung an individuelle Wünsche.

Ein weiteres Anwendungsgebiet sind optische Geräte, bei denen zeitweise ein Strahlengang geschwächt werden soll. So besteht z. B. bei Mikroskopen der Wunsch, daß das Bild unabhängig von der eingestellten Vergrößerung immer die gleiche Helligkeit hat. Hierfür wird an eine geeignete Stelle des Mikroskopstrahlengangs eine planparallele Glasplatte mit einer elektrochromen Schicht gebracht und deren Absorptionsgrad mit einer der beschriebenen Anordnungen verändert. So kann z. B. der Stufenschalter 36 direkt mit einem Vergrößerungswechsler oder dem Objektivrevolver verbunden werden und die Widerstände 31 bis 34 können genau den jeweils vorliegenden Helligkeitsunterschieden angepaßt werden. Bei Operationsmikroskopen mit einer Zoom-Vergrößerungseinrichtung ist die mit Fig. 4 beschriebene automatische Regelung mit einem optischen Sensor besonders vorteilhaft. In allen Fällen kann die elektrochrome Schicht auch auf ein schon vorhandenes optisches Teil aufgebracht werden.

Ein großer Vorteil aller beschriebenen Anordnungen besteht darin, daß auch nach einer sehr großen Zahl von Wechseln des Absorptionsvermögens der elektrochromen Schicht eine einwandfreie Reproduzierbarkeit erreicht wird, ohne daß der völlig entfärbte Zustand eingestellt werden muß.

**Patentansprüche**

1. Verfahren zur Regelung des Absorptionsgrades einer elektrochromen Schicht, dadurch gekennzeichnet, daß der Absorptionsgrad optisch gemessen wird, daß das daraus abgeleitete Signal mit einem Vorgabewert verglichen wird und daß das resultierende Signal einem Regler zugeführt wird, welcher der Schicht elektrischen Strom der einen oder der anderen Richtung zuführt.

2. Verfahren nach Anspruch 1, dadurch gekennzeichnet, daß der Regler eine Totzone und zwei Hysteresebereiche an den Schaltpunkten aufweist.

3. Anordnung zur Durchführung des Verfahrens nach Anspruch 1, dadurch gekennzeichnet, daß eine optische Absorptions-Meßeinrichtung (2, 3) mit einem Regler (22) verbunden ist, dessen Eingang außerdem mit einem Schaltungsteil (6) zur Vorgabe eines Sollwertes verbunden ist, daß der Regler mit den Schalteingängen von zwei begrenzbaren Stromquellen (9, 10) verbunden ist und daß die Stromquellen (9, 10) mit der elektrochromen Schicht (1) zur Zufuhr von Strom der einen oder der anderen Richtung verbunden sind.

4. Anordnung zur Durchführung des Verfahrens nach Anspruch 2, dadurch gekennzeichnet, daß eine optische Absorptions-Meßeinrichtung (2, 3) mit einem Regler (22) verbunden ist, dessen Eingang außerdem mit einem Schaltungsteil (6) zur Vorgabe eines Sollwertes verbunden ist, daß der Regler mit den Schalteingängen von zwei begrenzbaren Stromquellen (9, 10) verbunden ist, daß die Stromquellen (9, 10) mit der elektrochromen Schicht (1) zur Zufuhr von Strom der einen oder der anderen Richtung verbunden sind, daß der Regler aus zwei als Hystereseglieder beschalteten Operationsverstärkern (7, 8) aufgebaut ist und daß zwischen den Hysteresebereichen eine Totzone ist.

5. Anordnung nach Anspruch 3 oder 4, dadurch gekennzeichnet, daß für die begrenzbaren Stromquellen (9, 10) Transistoren (17, 18) in Emitterschaltung vorgesehen sind, welche über Basiswiderstände (19, 20) mit den Ausgängen der Operationsverstärker (7, 8) verbunden sind.

6. Anordnung nach einem der Ansprüche 3 bis 5, dadurch gekennzeichnet, daß die optische Absorptions-Meßeinrichtung aus einer Leuchtdiode (2) und einer Pindiode (3) oder einem Fototransistor aufgebaut ist, die auf gegenüberliegenden Seiten der elektrochromen Schicht angeordnet sind.

7. Anordnung nach einem der Ansprüche 3 bis 5, dadurch gekennzeichnet, daß die optische Absorptions-Meßeinrichtung aus einer Leuchtdiode (2) und einer Pindiode (3) oder einem Fototransistor aufgebaut ist, die auf der gleichen Seite der elektrochromen Schicht angeordnet sind und daß die Schicht auf der anderen Seite verspiegelt ist.

8. Anordnung nach einem der Ansprüche 3 bis 7, dadurch gekennzeichnet, daß zur Unterstützung der Batterie Solarzellen vorgesehen sind.

9. Anordnung nach einem der Ansprüche 3 bis 8, dadurch gekennzeichnet, daß für die Erzeugung des Vorgabewertes eine Spannungsquelle mit einem Regelpotentiometer (28) oder einem Stufenschalter (36) vorgesehen ist.

10. Anordnung nach einem der Ansprüche 3 bis 8, dadurch gekennzeichnet, daß für die Erzeugung des Vorgabewertes ein optischer Sensor (40) zur Messung der Helligkeit vorgesehen ist.

11. Anordnung nach Anspruch 10, dadurch gekennzeichnet, daß der optische Sensor (40) über einen beschalteten Operationsverstärker (41) und — über zwei als invertierende Addierer beschaltete Operationsverstärker (47, 51) mit dem Eingang (6) des Reglers (22) verbunden ist.

12. Verwendung der Anordnung nach einem der Ansprüche 3 bis 11 für Sonnenschutzbrillen, abblendbare Spiegel und optische Filter.

**Claims**

1. A method of controlling the absorptance of an electrochromic layer, characterized by the fact that the absorptance is measured optically, that the signal derived therefrom is compared with a guide value and that the resultant signal is fed to a controller which supplies current of one or the other direction to the layer.

2. A method according to claim 1, characterized by the fact that the controller has a dead zone and two hysteresis regions at the switch points.

3. An arrangement for carrying out the method of claim 1, characterized by the fact that an optical absorption measuring device (2, 3) is connected to a controller (22) whose input in furthermore connected to a circuit part (6) for the providing of a desired value, that the controller is connected to the switch inputs of two sources of limitable current (9, 10), and that the current sources (9, 10) are connected to the electrochromic layer (1) for current supply in one or the other direction.

4. An arrangement for carrying out the method of claim 2, characterized by the fact that an optical absorption measuring device (2, 3) is connected to a controller (22) whose input is furthermore connected to a circuit part (6) for the providing of a desired value, that the controller is connected to the switch inputs of two sources of limitable current (9, 10), that the current sources (9, 10) are connected to the electrochromic layer (1) for current supply in one or the other direction, that the controller is constructed of two operational amplifiers (7, 8) wired as hysteresis members, and that there is a dead zone between the hysteresis regions.

5. An arrangement according to claim 3 or 4, characterized by the fact that, for the sources of limitable current (9, 10), transistors (17, 18) are provided in the emitter circuit, they being connected via base resistors (19, 20) to the outputs of the operational amplifiers (7, 8).

6. An arrangement according to one of claims 3 to 5, characterized by the fact that the optical absorption measuring device is formed of a light-emitting diode (2) and of a pin diode (3) or a phototransistor which are arranged on opposite sides of the electrochromic layer.

7. An arrangement according to one of claims 3 to 5, characterized by the fact that the optical absorption measuring device is formed of a light-emitting diode and of a pin diode (3) or a phototransistor which are arranged on the same side of the electrochromic layer, and that the layer is reflective on the other side.

8. An arrangement according to one of claims 3 to 7, characterized by the fact that solar cells are provided in order to assist the battery.

9. An arrangement according to one of claims 3 to 8, characterized by the fact that a voltage source having a control potentiometer (28) or a step switch (36) is provided for the production of the guide value.

10. An arrangement according to one of claims 3 to 8, characterized by the fact that an optical sensor (40) for measuring the brightness is provided for production of the guide value.

11. An arrangement according to claim 10, characterized by the fact that the optical sensor (40) is connected to the input (6) of the controller (22) via a wired operational amplifier (41) and via two operational amplifiers (47, 51) wired as inverting adders.

12. Application of an arrangement according to one of claims 3 to 11, for sunglasses, dimmable mirrors and optical filters.

## Revendications

1. Procédé pour la régulation du facteur d'absorption d'une couche électrochromique, caractérisé en ce que l'on mesure le facteur d'absorption par voie optique, on compare le signal tiré de cette mesure avec une valeur préfixée et on applique le signal résultant de la comparaison à un régulateur qui alimente la couche avec un courant électrique d'un sens ou de l'autre.

2. Procédé selon la revendication 1, caractérisé en ce que le régulateur présente une zone morte et deux régions d'hystérésis aux points de commutation.

3. Dispositif pour la mise en œuvre du procédé selon la revendication 1, caractérisé en ce qu'un dispositif de mesure optique de l'absorption (2, 3) est relié à un régulateur (22) dont l'entrée est en outre reliée à une partie de montage (6) pour préfixer une valeur de consigne, que le régulateur est connecté aux entrées de commutation de deux sources de courant (9, 10) pouvant être limitées et que les sources de courant (9, 10) sont connectées à la couche électrochromique (1) en vue de l'amenée de courant d'un sens ou de l'autre.

4. Dispositif pour la mise en œuvre du procédé selon la revendication 2, caractérisé en ce qu'un dispositif de mesure optique de l'absorption (2, 3) est relié à un régulateur (22) dont l'entrée est en outre reliée à une partie de montage (6) pour préfixer une valeur de consigne, que le régulateur est connecté aux entrées de commutation de deux sources de courant pouvant être limitées (9, 10), que les sources de courant (9, 10) sont connectées à la couche électrochromique (1) en vue de l'amenée de courant d'un sens ou de l'autre, que le régulateur est constitué de deux amplificateurs opérationnels (7, 8) montés en éléments d'hystérésis et qu'une zone morte se trouve entre les régions d'hystérésis.

5. Dispositif selon la revendication 3 ou 4, caractérisé en ce que les sources de courant pouvant être limitées (9, 10) sont constituées par des transistors (17, 18) dans un montage à émetteur commun, qui sont connectés à travers des résistances de base (19, 20) aux sorties des amplificateurs opérationnels (7, 8).

6. Dispositif selon une des revendications 3 à 5, caractérisé en ce que le dispositif de mesure optique de l'absorption est constitué d'une diode électroluminescente (2) et d'une diode pin (3) ou d'un phototransistor, qui sont disposés sur des côtés opposés de la couche électrochromique.

7. Dispositif selon une des revendications 3 à 5, caractérisé en ce que le dispositif de mesure optique de l'absorption est constitué d'une diode électroluminescente (2) et d'une diode pin (3) ou d'un phototransistor, qui sont disposés du même côté de la couche électrochromique, et que la couche est rendue réfléchissante sur l'autre côté.

8. Dispositif selon une des revendications 3 à 7, caractérisé en ce que des cellules solaires sont prévues pour suppléer la pile.

9. Dispositif selon une des revendications 3 à 8, caractérisé en ce qu'une source de tension avec un potentiomètre de réglage (28) ou un commutateur à gradins (36) sont prévus pour produire la valeur préfixée.

10. Dispositif selon une des revendications 3 à 8, caractérisé en ce qu'un capteur optique (40) de mesure de la luminosité est prévu pour la production de la valeur préfixée.

11. Dispositif selon la revendication 10, caractérisé en ce que le capteur optique (40) est connecté à l'entrée (6) du régulateur (22) à travers un amplificateur opérationnel monté (41) et à travers deux amplificateurs opérationnels (47, 51) montés en additionneurs inverseurs.

12. Utilisation du dispositif selon une des revendications 3 à 11 pour lunettes de soleil, miroirs dont la lumière renvoyée peut être atténuée et filtres optiques.

# Fig.1

Fig.2

Fig.3

Fig.4